# EUROPEAN PATENT APPLICATION

(11) **EP 3 855 796 A1**
(43) Date of publication of application: **28.07.2021**
(21) Application number: 19871559.1
(22) Date of filing: 08.10.2019
(51) Int. Cl.: H04W 28/02

(54) **DATA TRANSMISSION METHOD AND APPARATUS**

(30) Priority: 09.10.2018 CN 201811175312
(71) Applicant: Huawei Technologies Co., Ltd., Longgang District Shenzhen, Guangdong 518129 (CN)
(72) Inventor: SUN, Haiyang, Shenzhen, Guangdong 518129 (CN); XIONG, Chunshan, Shenzhen, Guangdong 518129 (CN); TAN, Shiyong, Shenzhen, Guangdong 518129 (CN)
(74) Representative: Epping - Hermann - Fischer
(86) International application number: PCT/CN2019/110010
(87) International publication number: WO 2020/073899

(57) **Abstract**

This application provides a data transmission method and apparatus, and relates to the field of communications technologies, to split data of different applications to different access network apparatuses. The method includes: A session management network element receives radio access technology RAT preference parameter information sent by a policy management network element, and sends the RAT preference parameter information to at least one of an access network apparatus, a terminal apparatus, and a user plane function UPF network element. The RAT preference parameter information is used to indicate a target radio access technology used to transmit data of a target application. The method is used in a process in which a terminal apparatus performs data transmission.

## Description

This application claims priority to Chinese Patent Application No. 201811175312.0, filed with the China National Intellectual Property Administration on October 9, 2018 and entitled "DATA TRANSMISSION METHOD AND APPARATUS", which is incorporated herein by reference in its entirety.

### TECHNICAL FIELD

This application relates to the field of communications technologies, and in particular, to a data transmission method and apparatus.

### BACKGROUND

Currently, with gradual evolution of mobile communications technologies, a system architecture for mobile communications gradually changes. In a fifth-generation mobile communications technology (Fifth-generation, 5G) communications system, a 5G core network device may be simultaneously connected to access network devices that use different radio access technologies, and a terminal may also be simultaneously connected to access network devices that use different radio access technologies. For example, the 5G core network device may be simultaneously connected to an access network device using an NR technology and an access network device using an evolved-universal mobile telecommunications system terrestrial radio access (Evolved-Universal Mobile Telecommunications System Terrestrial Radio Access, E-UTRA) technology. The terminal may access a core network through the access network device using the NR technology, or may access the core network through the access network device using the E-UTRA technology.

The terminal and the core network device need to determine an access network device used for data transmission. Currently, the core network device and the terminal usually select, based on signal strength of access network devices, and the like, an access network device configured to provide a service. A terminal handover is used as an example. When determining that signal quality of an access network device is relatively good, the terminal may choose to be handed over to a cell covered by the access network device, and communicate with the core network device by using the cell.

However, in the foregoing solution to selecting the access network device, characteristics of different data are not considered to select different access network devices for the different data.

### SUMMARY

Embodiments of this application provide a data transmission method and apparatus, to split data of different applications to different network devices.

To achieve the foregoing objective, the following technical solutions are used in the embodiments of this application.

According to a first aspect, an embodiment of this application provides a data transmission method. The method is applied to a session management network element or a chip of a session management network element. The method includes: The session management network element receives radio access technology RAT preference parameter information sent by a policy management network element, and sends the RAT preference parameter information to at least one of an access network apparatus, a terminal apparatus, and a user plane function UPF network element. The RAT preference parameter information is used to indicate a target radio access technology used to transmit data of a target application.

The radio access technology in this embodiment of this application includes, but is not limited to the following radio access technologies: a new radio (New radio, NR) technology, an E-UTRA technology, an evolved-universal mobile telecommunications system terrestrial radio access new radio (Evolved-Universal Mobile Telecommunications System Terrestrial Radio Access New radio, E-UTRA-NR) dual connectivity technology, a universal mobile telecommunications system terrestrial radio access (Universal Mobile Telecommunications System Terrestrial Radio Access, UTRA) technology, an enhanced data rate for global system for mobile communications evolution radio access network (Enhanced Data Rate for Global System for Mobile Communication Evolution Radio Access Network, GERAN) technology, and a code division multiple access 2000 technology (CDMA2000-1XRTT). In addition, for data of different applications (Application, APP), different radio access technologies may be used for transmission. Herein, the different applications may be third-party applications, such as a WeChat (WeChat) application, installed on the terminal apparatus, or native applications, such as an SMS message application and a telephony application, installed on the terminal apparatus. The terminal apparatus may be a device such as a mobile phone or a computer, or may be a chip of a device such as a mobile phone or a computer.

According to the data transmission method provided in this embodiment of this application, the session management network element receives the RAT preference parameter information sent by the policy management network element, and sends the RAT preference parameter information to the at least one of the access network apparatus, the terminal apparatus, and the user plane function network element, to indicate the radio access technology used by the access network apparatus, the terminal apparatus, and the user plane function network element to transmit data. In this way, different radio access technologies may be used to transmit different data, to improve network resource utilization.

In a possible design, the session management network element may further perform the following step: performing quality of service flow QoS flow binding based on the RAT preference parameter information. The QoS flow binding means that the SMF associates a PCC rule with a QoS flow based on the RAT preference parameter information, so that data of different applications is associated with different QoS flows, and is transmitted by using the different QoS flows.

In a possible design, that the session management network element receives RAT preference parameter information sent by a policy management network element may be specifically implemented as the following step: The session management network element receives policy and charging control PCC rule information sent by the policy management network element, where the PCC rule information includes the RAT preference parameter information. Alternatively, the session management network element receives quality of service QoS parameter information sent by the policy management network element, where the QoS parameter information includes the RAT preference parameter information.

It should be noted that the QoS parameter information in this embodiment of this application may be a 5G quality of service identifier (Fifth-generation QoS Identifier, 5QI) shown in Table 2. The 5QI is a scalar, and may be used to obtain, through indexing, a 5G QoS feature corresponding to the 5QI. For example, when a value of the 5QI is 3, corresponding 5G QoS features include that a packet delay (Packet Delay Budget) is 50 ms, that a default priority is 30, the RAT preference parameter information, and the like.

In a possible design, that the session management network element sends the RAT preference parameter information to an access network apparatus may be specifically implemented as the following step: The session management network element sends an N2 message to the access network apparatus. The N2 message includes a quality of service profile QoS profile, and the QoS profile includes the RAT preference parameter information. The N2 message is used to indicate the access network apparatus to transmit the data based on the RAT preference parameter information.

In a possible design, that the session management network element sends the RAT preference parameter information to a terminal apparatus may be specifically implemented as: The session management network element sends an N1 message to the terminal apparatus. The N1 message includes a quality of service rule QoS rule, and the QoS rule includes the RAT preference parameter information. The N1 message is used to indicate the terminal apparatus to transmit data based on the RAT preference parameter information.

In a possible design, the session management network element may further perform the following step: sending, to the policy management network element based on a trigger condition, information about a radio access technology supported by the access network apparatus managed by the session management network element. The information about the radio access technology is used by the policy management network element to make a policy decision, and the policy decision includes determining the RAT preference parameter information.

According to a second aspect, an embodiment of this application provides a data transmission method. The method is applied to a terminal apparatus. For example, the method may be applied to a terminal or a chip of a terminal. The method includes: The terminal apparatus receives radio access technology RAT preference parameter information sent by a session management network element, and transmits uplink data of a target application by using a target radio access technology. The RAT preference parameter information is used to indicate the target radio access technology used to transmit data of the target application.

In a possible design, that the terminal apparatus receives RAT preference parameter information sent by a session management network element may be specifically implemented as: The terminal apparatus receives an N1 message sent by the session management network element. The N1 message includes the RAT preference parameter information.

According to a third aspect, an embodiment of this application provides a data transmission method. The method is applied to a terminal apparatus. For example, the method may be applied to a terminal or a chip of a terminal. The method includes: The terminal apparatus receives downlink data, sent by an access network apparatus, of a target application, where the downlink data carries radio access technology RAT identifier information. The terminal apparatus transmits, based on the RAT identifier information and by using a target radio access technology, uplink data associated with the downlink data.

The RAT identifier information is used to indicate the target radio access technology used to transmit the downlink data. The uplink data associated with the downlink data may be uplink data belonging to a same application to which the downlink data belongs. For example, for downlink data of a WeChat application, uplink data associated with the downlink data is uplink data of the WeChat application. For example, when the terminal apparatus receives downlink data of an application, and RAT identifier information included in the downlink data is 0, it indicates that an NR technology is used to transmit the downlink data. Subsequently, the terminal apparatus may transmit uplink data of the same application by using the NR technology. In this way, similar transmission effects can be achieved for the uplink data and the downlink data of the same application.

In a possible design, the terminal encapsulates, based on an RAT identifier, the uplink data associated with the downlink data, so that the encapsulated downlink data and the uplink data associated with the encapsulated downlink data have the same RAT identifier. For example, after receiving a downlink data packet, the terminal apparatus obtains, by reflecting a filter (filter) of the downlink data packet, an uplink data packet associated with the downlink data. For specific descriptions of performing reflective inversion on the filter, refer to the conventional technology. Details are not described herein.

According to a fourth aspect, an embodiment of this application provides a data transmission method. The method is applied to an access network apparatus. For example, the method may be applied to an access network device such as a base station, or may be used in a chip of an access network device. The method includes: The access network apparatus receives radio access technology RAT preference parameter information sent by a session management network element, and transmits data of a target application based on the RAT preference parameter information and by using a target radio access technology. The RAT preference parameter information is used to indicate the target radio access technology used to transmit the data of the target application.

In a possible design, the access network apparatus may further perform the following step: receiving an RAT update indication sent by the session management network element, and sending RAT preference parameter information supported by the access network apparatus to the session management network element. The RAT update indication is used to indicate to update the RAT preference parameter information. For example, the RAT update indication includes five pieces of RAT preference parameter information, and the access network apparatus may accept three of the five pieces of the RAT preference parameter information. In this case, the access network apparatus sends, to the session management network element, the three pieces of RAT preference parameter information that can be supported.

In a possible design, that the access network apparatus receives RAT preference parameter information sent by a session management network element may be specifically implemented as: The access network apparatus receives an N2 message sent by the session management network element. The N2 message includes the RAT preference parameter information.

According to a fifth aspect, an embodiment of this application provides a data transmission method. The method is applied to an access network apparatus. For example, the method may be applied to an access network device such as a base station, or may be applied to a chip of an access network device. The method includes: The access network apparatus receives data, sent by a UPF network element, of a target application, where the data of the target application carries radio access technology RAT identifier information. The access network apparatus transmits the data of the target application based on the RAT identifier information and by using a target radio access technology. The RAT identifier information is used to indicate the target radio access technology used to transmit the data of the target application. In this way, in uplink and downlink data transmission processes, the access network apparatus may split the data based on the RAT identifier information included in the data, to improve network resource utilization.

According to a sixth aspect, an embodiment of this application provides a data transmission method. The method is applied to a user plane function network element or a chip of a user plane function network element. The method includes: The UPF network element receives radio access technology RAT preference parameter information sent by a session management network element, encapsulates data based on the RAT preference parameter information, and sends the encapsulated data to an access network apparatus. The RAT preference parameter information is used to indicate a target radio access technology used to transmit the data. The encapsulated data is used to indicate the access network apparatus to transmit the data based on RAT identifier information. The encapsulated data carries the RAT identifier information, and the RAT identifier information is used to indicate the target radio access technology used to transmit the data.

According to the data transmission method, the UPF re-encapsulates the data. The encapsulated data includes the RAT identifier information, and the RAT identifier information is used as a user plane marker of the data, to distinguish between different data. Specifically, the RAT identifier information is used to distinguish between radio access technologies associated with data of different applications, in other words, radio technologies used to transmit the data of the applications. Subsequently, in uplink and downlink data transmission processes, both a terminal apparatus and the access network apparatus may split the data based on the RAT identifier information included in the data, to improve network resource utilization.

According to a seventh aspect, an embodiment of this application provides a data transmission method. The method is applied to a policy management network element or a chip of a policy management network element. The method includes: The policy management network element obtains RAT preference parameter information, and sends the RAT preference parameter information to a session management network element.

That the policy management network element obtains RAT preference parameter information may be specifically implemented as: The policy management network element receives information, sent by the session management network element, about a radio access technology supported by an access network apparatus managed by the session management network element. The information about the radio access technology is used by the policy management network element to make a policy decision, and the policy decision includes determining the radio access technology RAT preference parameter information.

Alternatively, that the policy management network element obtains RAT preference parameter information may be specifically implemented as: The policy management network element receives the RAT preference parameter information sent by an application function AF network element. The RAT preference parameter information is used to indicate a radio access technology used to transmit data of a target application.

Optionally, that the policy management network element sends the RAT preference parameter information to a session management network element may be specifically implemented as: The policy management network element sends a policy and charging control PCC rule to the session management network element, where the PCC rule includes the RAT preference parameter information.

Optionally, that the policy management network element sends the RAT preference parameter information to a session management network element may be specifically implemented as: The policy management network element sends quality of service QoS parameter information to the session management network element, where the QoS parameter information includes the RAT preference parameter information.

In a possible design, a UPF network element may further perform the following step: receiving tunnel information sent by the session management network element, where the tunnel information is used to indicate an access network apparatus associated with the UPF network element.

According to an eighth aspect, an embodiment of this application provides a session management network element. The session management network element includes a transceiver. The transceiver is configured to receive radio access technology RAT preference parameter information sent by a policy management network element, where the RAT preference parameter information is used to indicate a target radio access technology used to transmit data of a target application; and send the RAT preference parameter information to at least one of an access network apparatus, a terminal apparatus, and a user plane function UPF network element.

In a possible design, a processor is further disposed in the session management network element. The processor is configured to perform quality of service flow QoS flow binding based on the RAT preference parameter information.

In a possible design, that the transceiver is configured to receive RAT preference parameter information sent by a policy management network element includes: the transceiver is configured to receive policy and charging control PCC rule information sent by the policy management network element, where the PCC rule information includes the RAT preference parameter information; or the transceiver is configured to receive quality of service QoS parameter information sent by the policy management network element, where the QoS parameter information includes the RAT preference parameter information.

In a possible design, that the transceiver is configured to send the RAT preference parameter information to an access network apparatus may be specifically implemented as: the transceiver is configured to send an N2 message to the access network apparatus. The N2 message includes a quality of service profile QoS profile, and the QoS profile includes the RAT preference parameter information. The N2 message is used to indicate the access network apparatus to transmit the data based on the RAT preference parameter information.

In a possible design, that the transceiver is configured to send the RAT preference parameter information to a terminal apparatus may be specifically implemented as: the transceiver is configured to send an N1 message to the terminal apparatus. The N1 message includes a quality of service rule QoS rule, and the QoS rule includes the RAT preference parameter information. The N1 message is used to indicate the terminal apparatus to transmit data based on the RAT preference parameter information.

In a possible design, the transceiver may further be configured to send, to the policy management network element based on a trigger condition, information about a radio access technology supported by the access network apparatus managed by the session management network element. The information about the radio access technology is used by the policy management network element to make a policy decision, and the policy decision includes determining the RAT preference parameter information.

According to a ninth aspect, an embodiment of this application provides a terminal apparatus. The terminal apparatus includes a transceiver. The transceiver is configured to receive radio access technology RAT preference parameter information sent by a session management network element, where the RAT preference parameter information is used to indicate a target radio access technology used to transmit data of a target application; and transmit uplink data of the target application by using the target radio access technology.

In a possible design, that the transceiver is configured to receive RAT preference parameter information sent by a session management network element may be specifically implemented as: the transceiver is configured to receive an N1 message sent by the session management network element. The N1 message includes the RAT preference parameter information.

According to a tenth aspect, an embodiment of this application provides a terminal apparatus. The terminal apparatus includes a transceiver. The transceiver is configured to receive downlink data, sent by an access network apparatus, of a target application, where the downlink data carries radio access technology RAT identifier information, and the RAT identifier information is used to indicate a target radio access technology used to transmit the downlink data; and transmit, based on the RAT identifier information and by using the target radio access technology, uplink data associated with the downlink data.

According to an eleventh aspect, an embodiment of this application provides an access network apparatus. The access network apparatus includes a transceiver. The transceiver is configured to receive radio access technology RAT preference parameter information sent by a session management network element, where the RAT preference parameter information is used to indicate a target radio access technology used to transmit data of a target application; and transmit the data of the target application based on the RAT preference parameter information and by using the target radio access technology.

In a possible design, the transceiver is further configured to receive an RAT update indication sent by the session management network element, where the RAT update indication is used to indicate to update the RAT preference parameter information; and send RAT preference parameter information supported by the access network apparatus to the session management network element.

In a possible design, that the transceiver is configured to receive RAT preference parameter information sent by a session management network element includes: the transceiver is configured to receive an N2 message sent by the session management network element. The N2 message includes the RAT preference parameter information.

According to a twelfth aspect, an embodiment of this application provides an access network apparatus. The access network apparatus includes a transceiver. The transceiver is configured to receive data, sent by a user plane function UPF network element, of a target application, where the data of the target application carries radio access technology RAT identifier information, and the RAT identifier information is used to indicate a target radio access technology used to transmit the data of the target application; and transmit the data of the target application based on the RAT identifier information and by using the target radio access technology.

According to a thirteenth aspect, an embodiment of this application provides a user plane function network element. The user plane function network element includes a transceiver and a processor.

The transceiver is configured to receive radio access technology RAT preference parameter information sent by a session management network element. The RAT preference parameter information is used to indicate a target radio access technology used to transmit data. The processor is configured to encapsulate the data based on the RAT preference parameter information. The encapsulated data carries RAT identifier information. The RAT identifier information is used to indicate the target radio access technology used to transmit the data. The transceiver is further configured to send the encapsulated data to an access network apparatus. The encapsulated data is used to indicate the access network apparatus to transmit the data based on the RAT identifier information.

According to a fourteenth aspect, an embodiment of this application provides a policy management network element. The policy management network element includes a transceiver. The transceiver is configured to receive information, sent by a session management network element, about a radio access technology supported by an access network apparatus managed by the session management network element. The information about the radio access technology is used by the policy management network element to make a policy decision, and the policy decision includes determining radio access technology RAT preference parameter information. Alternatively, the policy management network element receives RAT preference parameter information sent by an application function AF network element. The RAT preference parameter information is used to indicate a radio access technology used to transmit data of a target application. The transceiver is further configured to send the RAT preference parameter information to the session management network element.

In a possible design, that the transceiver is configured to send the RAT preference parameter information to the session management network element includes: the transceiver is configured to send a policy and charging control PCC rule to the session management network element, where the PCC rule includes the RAT preference parameter information; or the transceiver is configured to send quality of service QoS parameter information to the session management network element, where the QoS parameter information includes the RAT preference parameter information.

According to a fifteenth aspect, an embodiment of this application provides a data transmission apparatus. The apparatus has a function of implementing the data transmission method in any possible design of any one of the foregoing aspects. The function may be implemented by hardware, or may be implemented by hardware executing corresponding software. The hardware or the software includes one or more modules corresponding to the foregoing function.

According to a sixteenth aspect, a data transmission apparatus is provided. The data transmission apparatus includes a processor and a memory. The memory is configured to store a computer-executable instruction. When the data transmission apparatus runs, the processor executes the computer-executable instruction stored in the memory, so that the data transmission apparatus performs the data transmission method in any possible design of any one of the foregoing aspects.

According to a seventeenth aspect, a data transmission apparatus is provided. The data transmission apparatus includes a processor. After the processor is coupled to a memory and reads an instruction in the memory, the processor is configured to perform the data transmission method in any possible design of any one of the foregoing aspects according to the instruction.

According to an eighteenth aspect, a computer-readable storage medium is provided. The computer-readable storage medium stores an instruction. When the instruction is run on a computer, the computer is enabled to perform the data transmission method in any possible design of any one of the foregoing aspects.

According to a nineteenth aspect, a computer program product including an instruction is provided. When the computer program product is run on a computer, the computer is enabled to perform the data transmission method in any possible design of any one of the foregoing aspects.

According to a twentieth aspect, a circuit system is provided. The circuit system includes a processing circuit. The processing circuit is configured to perform the data transmission method in any possible design of any one of the foregoing aspects.

According to a twenty-first aspect, a chip is provided. The chip includes a processor. The processor is coupled to a memory, and the memory stores a program instruction. When the program instruction stored in the memory is executed by the processor, the data transmission method in any possible design of any one of the foregoing aspects is implemented.

According to a twenty-second aspect, a communications system is provided. The communications system includes the terminal apparatus, the access network apparatus, the user plane function network element, the session management network element, and the policy management network element that are each in any one of the foregoing aspects.

For technical effects brought by any one of the design manners in the second aspect to the twenty-second aspect, refer to the technical effects brought by different design manners in the first aspect. Details are not described herein again.

### BRIEF DESCRIPTION OF DRAWINGS

FIG. 1 is a schematic diagram of an architecture of a communications system according to an embodiment of this application;
FIG. 2 is an architectural diagram of a data transmission system according to an embodiment of this application;
FIG. 3 is a schematic structural diagram of a communications device according to an embodiment of this application;
FIG. 4 is a schematic diagram of a dual-connectivity scenario according to an embodiment of this application;
FIG. 5A and FIG. 5B are a schematic flowchart of a data transmission method according to an embodiment of this application;
FIG. 6A and FIG. 6B are a schematic flowchart of a data transmission method according to an embodiment of this application;
FIG. 7 is a schematic flowchart of a data transmission method according to an embodiment of this application; and
FIG. 8 is a schematic structural diagram of a data transmission apparatus according to an embodiment of this application.

### DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, the terms "including" and "having", and any other variant thereof in the descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the system, the product, or the device. It should be noted that in embodiments of this application, the word such as "example" or "for example" is used to represent giving an example, an illustration, or a description. Any embodiment or design scheme described as an "example" or "for example" in the embodiments of this application should not be explained as being more preferred or having more advantages than another embodiment or design scheme. Exactly, use of the word such as "example" or "for example" is intended to present a related concept in a specific manner.

A data transmission method provided in the embodiments of this application may be applied to a 5G communications system, a future evolved system, or another similar communications system. In the embodiments of this application, the data transmission method in the embodiments of this application is mainly described by using an example in which the method is applied to the 5G system. Unified descriptions are provided herein, and details are not described below again.

5G communications systems include a system in a non-roaming scenario and a system in a roaming scenario. The system in each scenario may be a system that is based on a service-oriented interface, or may be a system that is based on a reference point. Herein, for specific descriptions of "based on a service-oriented interface" and "based on a reference point", refer to the conventional technology. Details are not described herein.

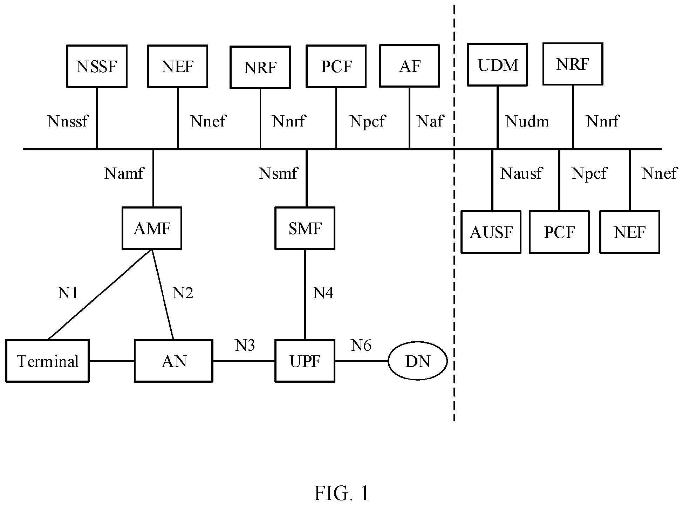

The following uses the 5G system that is used in the non-roaming scenario and that is based on the service-oriented interface as an example for description. FIG. 1 shows a network architecture to which the embodiments of this application are applicable.

As shown in FIG. 1, the system includes a terminal and network elements or devices such as a network slice selection function (Network Slice Selection Function, NSSF), a network exposure function (Network Exposure Function, NEF), a network repository function (Network Repository Function, NRF), a policy control function (Policy Control Function, PCF), an application function (Application Function, AF), a unified data management (Unified Data Management, UDM), an authentication server function (Authentication Server Function, AUSF), an access and mobility management function (Core Access and Mobility Management Function, AMF), a session management function (Session Management Function, SMF), an access network (Access Network, AN) network element, a user plane function (User Plane Function, UPF), and a data network (data network, DN) network element, where ANs include a wired access network and a radio access network (Radio Access Network, RAN).

The terminal accesses the AN in a wireless or wired manner. The wireless manner may be, for example, accessing the AN by using wireless fidelity (Wireless-Fidelity, WiFi), or through a cellular network (for example, E-UTRA or NR). The terminal communicates with the AMF through N1. The AN communicates with the UPF through N3, and communicates with the AMF through N2. The UPF communicates with the SMF through N4, and communicates with the DN network element through N6. The SMF communicates with the AMF through N11 (which is not shown in FIG. 1), communicates with the UDM through N10 (which is not shown in FIG. 1), and communicates with the PCF through N7 (which is not shown in FIG. 1). The AMF communicates with the AUSF through N12 (which is not shown in FIG. 1), and communicates with the UDM through N13 (which is not shown in FIG. 1). The AF communicates with the PCF through N5.

It may be understood that, based on a deployment requirement of the 5G system, the foregoing network elements may communicate with each other in a specific manner (for example, the terminal communicates with the AMF through the N1). The foregoing merely lists the manners of communication between the network elements related to the technical solutions in the embodiments of this application. For brevity of description, a manner of communication between other network elements is not described in detail in the embodiments of this application.

Optionally, a terminal apparatus in the embodiments of this application may include various handheld devices having a communication function, a wearable device, a computing device, or another processing device connected to a modem. The terminal apparatus may further include a personal digital assistant (personal digital assistant, PDA) computer, a tablet computer, a laptop computer (laptop computer), a machine type communication (machine type communication, MTC) terminal, user equipment (user equipment, UE), and the like. Certainly, the terminal apparatus may alternatively be a chip in the foregoing devices such as the UE. An implementation form of the terminal apparatus is not limited in the embodiments of this application.

Different applications (Application, APP) may be installed in the terminal, and service requirements of data of the different apps are different. For example, for an instant-messaging type of App, data of this type of App usually needs to be transmitted in real time, to ensure relatively good user experience. For a video playback type of App, data transmission with a low latency and high reliability is usually required. Certainly, different native applications in the terminal may also have different data transmission requirements. For example, a call related application related to making a call usually requires real-time data transmission. An SMS message related application may require data transmission with high reliability.

It should be noted that an application may also be referred to as an application for short below. Unified descriptions are provided herein, and details are not described below again.

An access network apparatus in the embodiments of this application may be, but is not limited to, various forms of network elements or entities such as a macro base station, a micro base station (which is also referred to as a small cell), a relay station, a transmission reception point (Transmission Reception Point, TRP), a next generation network node (g Node B, gNB), and an evolved NodeB connected to a next generation core network (ng evolved Node B, ng-eNB). The access network apparatus may further include a radio access network device in a non-3GPP system, such as a wireless local area network (wireless local area network, WLAN) access device. Certainly, the access network apparatus may alternatively be a chip in the foregoing various forms of network elements or entities such as the macro base station. An implementation form of the access network apparatus is not limited in the embodiments of this application.

For ease of description, the following mainly uses an example in which the access network apparatus is a base station. Unified descriptions are provided herein, and details are not described below again.

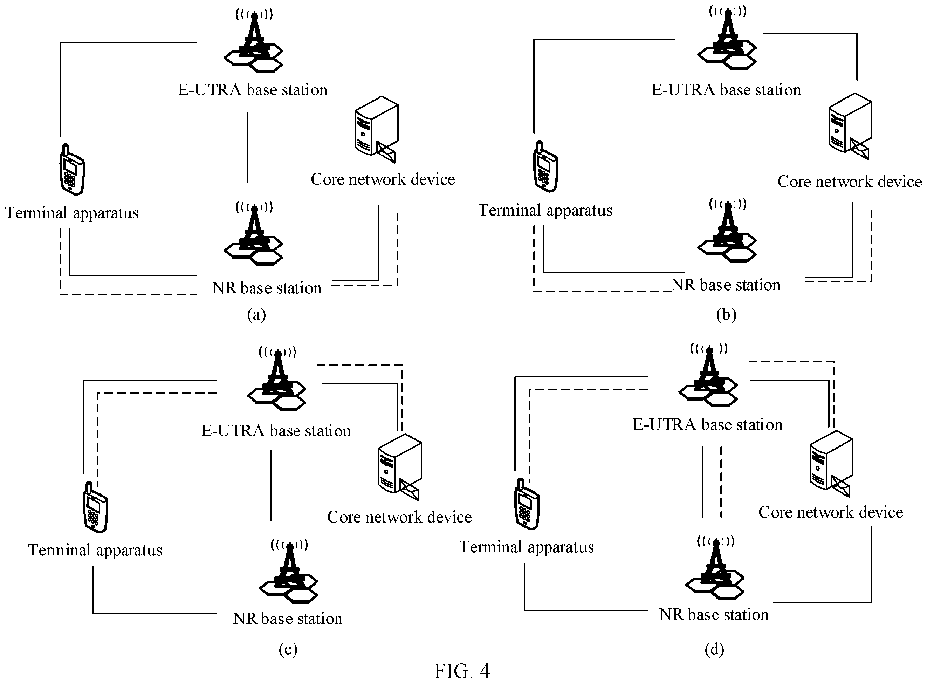

In the embodiments of this application, the terminal apparatus may be simultaneously connected to a plurality of access network apparatuses that use different radio access technologies, and a core network device may also be simultaneously connected to the plurality of access network apparatuses that use the different radio access technologies. This scenario may be referred to as a dual-connectivity scenario. For example, the terminal apparatus may be simultaneously connected to two access network apparatuses that use different radio access technologies, and the core network device may also be simultaneously connected to the two access network apparatuses that use the different radio access technologies. For example, the access network apparatuses are base stations. Referring to (a) in FIG. 4, a solid line represents a data connection, that is, a user plane (User Plane) connection, and a dashed line represents a signaling connection, that is, a control plane (Control Plane) connection. The terminal apparatus may be simultaneously connected to both an NR base station and an E-UTRA base station. In addition, there is a signaling connection and a data connection between the core network device and the NR base station, there is a data connection between the NR base station and the E-UTRA base station, and there is a data connection and a signaling connection between the NR base station and the terminal apparatus. There is a data connection between the terminal apparatus and the E-UTRA base station. In (a) of FIG. 4, the NR base station may be referred to as a master base station, and the E-UTRA base station may be referred to as a secondary base station. In a downlink direction, downlink data sent by the core network device may be transmitted to the NR base station, and the NR base station splits the downlink data. To be specific, the NR base station transmits the downlink data to the terminal apparatus. Alternatively, the NR base station sends the downlink data to the E-UTRA base station, and then the E-UTRA base station transmits the downlink data to the terminal apparatus. In an uplink direction, the terminal apparatus splits uplink data. To be specific, the terminal apparatus transmits the uplink data to the NR base station or the E-UTRA base station. If the terminal apparatus splits the uplink data to the NR base station, the NR base station sends the uplink data to the core network device. If the terminal apparatus splits the uplink data to the E-UTRA base station, the E-UTRA base station sends the uplink data to the NR base station, and then the NR base station sends the uplink data to the core network device.

Certainly, for connection relationships among the terminal apparatus, the access network apparatus, and the core network device, refer to (b), (c), and (d) in FIG. 4. In addition, for a specific explanation of each figure, refer to the related descriptions of (a) in FIG. 4. Details are not described herein again. Certainly, the dual-connectivity scenario is not limited to the four dual-connectivity scenarios listed in FIG. 4. There may be another dual-connectivity scenario. In the embodiments of this application, not all dual-connectivity scenarios are enumerated herein.

Optionally, the names of the network elements and the names of the interfaces between the network elements in FIG. 1 are merely examples. During specific implementation, the network elements or the interfaces between the network elements may have other names. Alternatively, the network elements may also be referred to as entities. This is not specifically limited in the embodiments of this application. All or some network elements in the core network may be physical entity network elements, or may be virtualized network elements. This is not limited herein.

In the embodiments of this application, that a network element (for example, a network element A) obtains information from another network element (for example, a network element B) may mean that the network element A directly receives the information from the network element B, or may mean that the network element A receives the information from the network element B through another network element (for example, a network element C). When the network element A receives the information from the network element B through the network element C, the network element C may transparently transmit the information, or may process the information, for example, include the information in different messages for transmission, or filter the information and send only information that is sifted out to the network element A. Similarly, in the embodiments of this application, that the network element A sends information to the network element B may mean that the network element A directly sends the information to the network element B, or may mean that the network element A sends the information to the network element B through another network element (for example, the network element C).

In addition, a network architecture and a service scenario that are described in the embodiments of this application are intended to describe the technical solutions in the embodiments of this application more clearly, and do not constitute a limitation on the technical solutions provided in the embodiments of this application. A person of ordinary skill in the art may learn that as network architectures evolve and new service scenarios emerge, the technical solutions provided in the embodiments of this application are also applicable to similar technical problems.

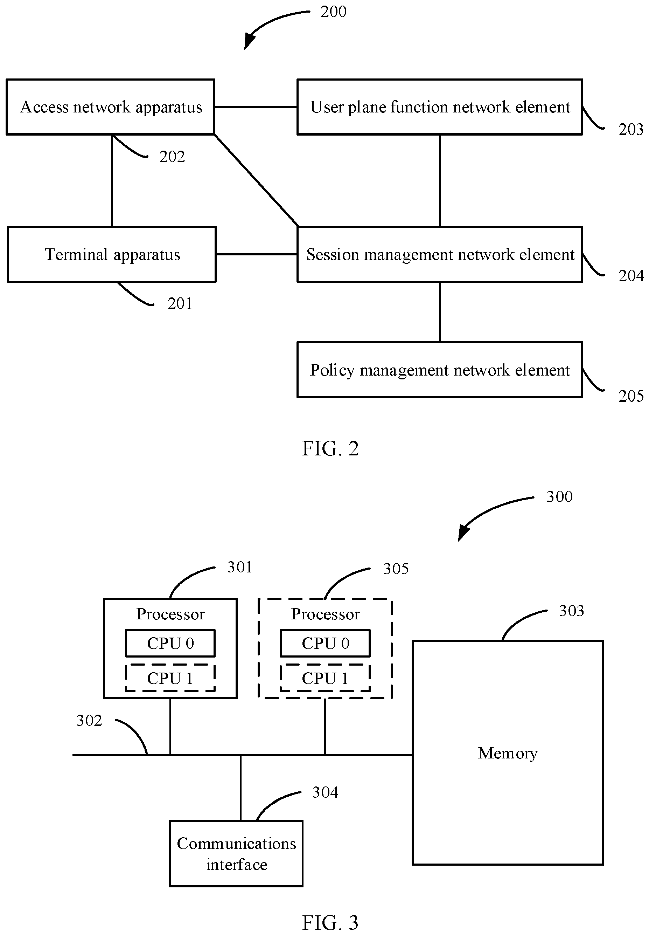

As shown in FIG. 2, an embodiment of this application provides a data transmission system 200. The data transmission system 200 includes a terminal apparatus 201, an access network apparatus 202, a user plane function network element 203, a session management network element 204, and a policy management network element 205.

The policy management network element 205 is configured to send RAT preference parameter information to the session management network element 204. The RAT preference parameter information is used to indicate a target radio access technology used to transmit data of a target application.

The session management network element 204 is configured to receive the RAT preference parameter information send by the policy management network element 205, and send the RAT preference parameter information to at least one of the terminal apparatus 201, the access network apparatus 202, and the user plane function network element 203.

The user plane function network element 203 is configured to receive the RAT preference parameter information from the session management network element 204. Subsequently, when receiving downlink data sent by a DN network element, the user plane function network element 203 encapsulates the downlink data based on the RAT preference parameter information, and sends the encapsulated downlink data to the access network apparatus 202. The encapsulated downlink data carries RAT identifier information, and may be used to indicate the access network apparatus 202 to transmit the encapsulated downlink data based on the RAT identifier information.

The access network apparatus 202 is configured to receive the RAT preference parameter information from the session management network element 204, and transmit uplink data of the target application based on the RAT preference parameter information and by using the target radio access technology. The access network apparatus 202 is further configured to: receive, from the user plane function network element 203, the downlink data that includes the RAT identifier information, and transmit the downlink data by using the target radio access technology and based on the RAT identifier information carried in the downlink data. The access network apparatus 202 is further configured to send, to the terminal apparatus 201, the downlink data that includes the RAT identifier information.

The terminal apparatus 201 is configured to receive the RAT preference parameter information sent by the session management network element 204, and transmit uplink data of the target application based on the RAT preference parameter information and by using the target radio access technology. The terminal apparatus 201 is further configured to receive the downlink data that is sent by the access network apparatus 202 and that includes the RAT identifier information, and transmit, based on the RAT identifier information and by using the target radio access technology, uplink data associated with the downlink data.

It should be noted that, FIG. 2 shows only a connection relationship, related to the technical solutions in the embodiments of this application, among the network elements. There may be another connection relationship among the network elements. Details are not described herein.

The data transmission system provided in this embodiment of this application may be used in the system shown in FIG. 1, a system having a similar architecture, or a subsequent evolved system. Correspondingly, the terminal apparatus corresponds to the terminal in FIG. 1 or a chip of the terminal. The access network apparatus corresponds to the AN network element in FIG. 1 or a chip of the AN network element. A network element or an entity corresponding to the user plane function network element may be the UPF in FIG. 1. A network element or an entity corresponding to the session management network element may be the SMF in FIG. 1. A network element or an entity corresponding to the policy management network element may be the PCF in FIG. 1.

Optionally, the terminal apparatus, the access network apparatus, the user plane function network element, the session management network element, and the policy management network element in FIG. 2 may be separately used as an independent device. Alternatively, the access network apparatus, the user plane function network element, the session management network element, and the policy management network element may be implemented in one device, for example, may be implemented as different function modules in one device. This is not specifically limited in this embodiment of this application. It may be understood that the function modules may be network elements in a hardware device, or may be software functions run on a hardware device, or may be virtualized functions instantiated on a platform (for example, a cloud platform).

For example, the terminal apparatus, the access network apparatus, the user plane function network element, the session management network element, and the policy management network element in this embodiment of this application may be implemented by using a communications device in FIG. 3. FIG. 3 is a schematic diagram of a hardware structure of a communications device according to an embodiment of this application. The communications device 300 includes at least one processor 301, a communications line 302, a memory 303, and at least one communications interface 304.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communications line 302 may include a path for transmitting information among the foregoing components.

The communications interface 304 is configured to communicate with another device or a communications network such as Ethernet, a radio access network (radio access network, RAN), or a wireless local area network (wireless local area network, WLAN) by using any apparatus such as a transceiver.

The memory 303 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other computer-accessible medium that can be used to carry or store expected program code that is in an instruction or data structure form, but is not limited thereto. The memory may exist independently, and is connected to the processor through the communications line 302. Alternatively, the memory may be integrated with the processor.

The memory 303 is configured to store a computer-executable instruction for executing the solutions in the embodiments of this application, and the processor 301 controls the execution. The processor 301 is configured to execute the computer-executable instruction stored in the memory 303, to implement data transmission methods provided in the following embodiments of this application.

Optionally, the computer- executable instruction in this embodiment of this application may also be referred to as application code. This is not specifically limited in this embodiment of this application.

During specific implementation, in an embodiment, the processor 301 may include one or more CPUs, for example, a CPU 0 and a CPU 1 in FIG. 3.

During specific implementation, in an embodiment, the communications device 300 may include a plurality of processors. Each of the processors may be a single-core (single-CPU) processor or a multi-core (multi-CPU) processor. The processor herein may be one or more devices, circuits, and/or processing cores configured to process data (for example, a computer program instruction).

It may be understood that FIG. 3 is merely a schematic diagram of a hardware structure that is used as an example and that is of the communications device. To implement the technical solutions in the embodiments of this application, the communications device 300 may further include another component. This is not limited in this embodiment of this application.

The communications device 300 may be a general-purpose device or a dedicated device. During specific implementation, the communications device 300 may be a device having a structure similar to that in FIG. 3. A type of the communications device 300 is not limited in this embodiment of this application.

It should be noted that in the following embodiments of this application, names of messages among network elements, names of parameters in the messages, or the like are merely examples, and there may be other names during specific implementation. Unified descriptions are provided herein, and details are not described below again.

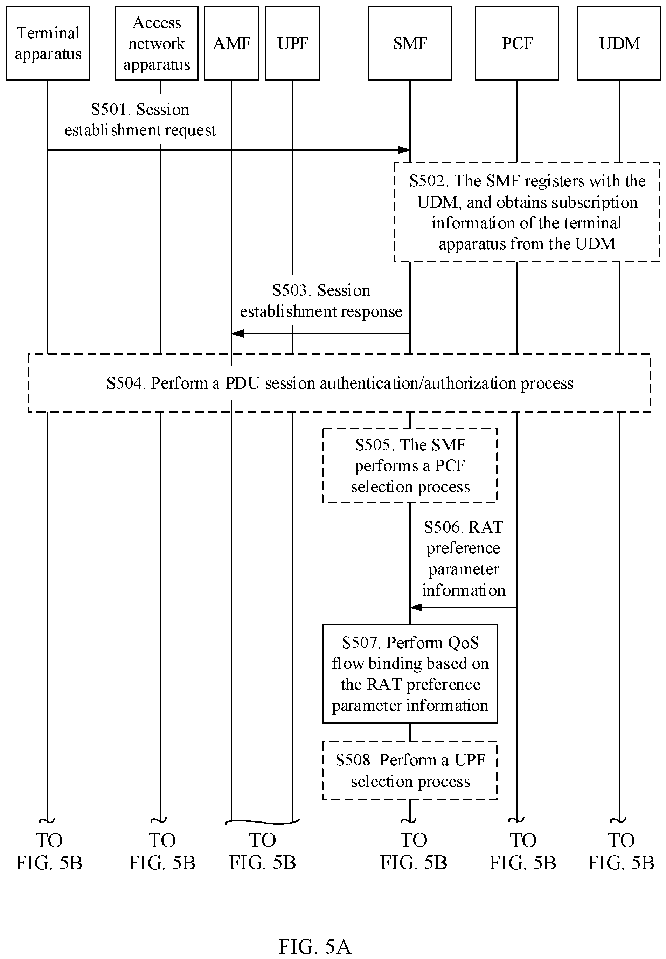

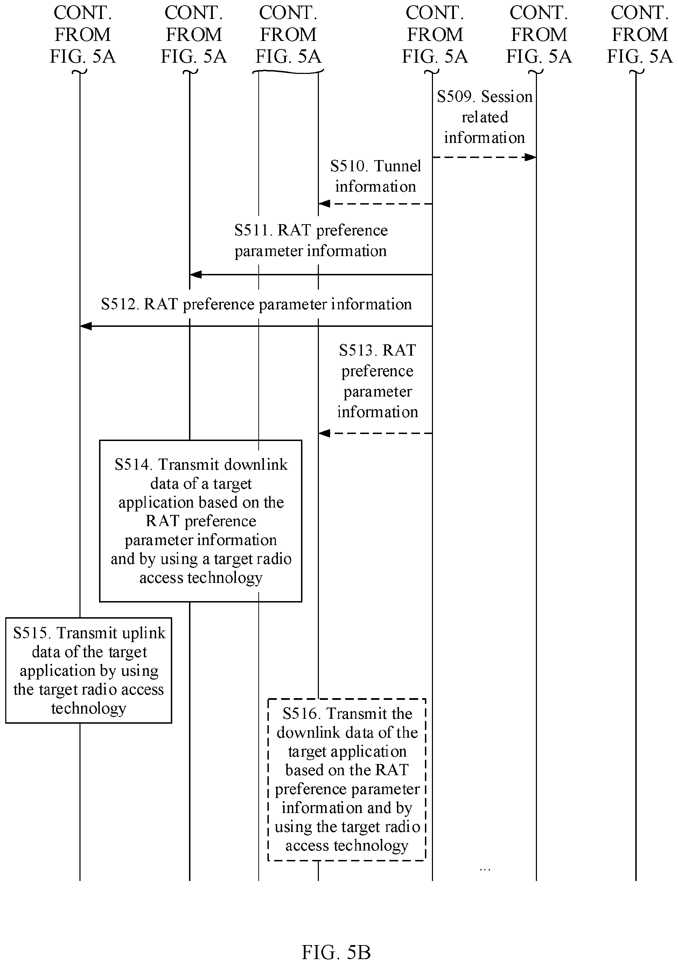

An embodiment of this application provides a data transmission method. The method may be applied to a process of establishing or updating a packet data unit (packet Data Unit, PDU) session. Using an example in which the method is applied to the process of establishing the PDU session, as shown in FIG. 5A and FIG. 5B, the method includes the following steps.

S501. A terminal apparatus sends a session establishment request to an SMF.

Correspondingly, the SMF receives the session establishment request.

In a possible implementation, the terminal apparatus sends the session establishment request to the SMF through an AMF. Specifically, the terminal apparatus sends the session establishment request to the AMF. The AMF selects an SMF based on a policy of the AMF, and sends the session establishment request to the selected SMF. Optionally, the AMF may select the SMF by querying an NRF.

(Optional) S502. The SMF registers with a UDM, and obtains subscription information of the terminal apparatus from the UDM.

The subscription information includes but is not limited to a user plane security policy, capability information of the terminal apparatus, a consumption package of a universal subscriber identity module (universal subscriber identity module, USIM) card of the terminal apparatus, and a service related to the consumption package.

It should be noted that, when there is no subscription information of the terminal apparatus in the SMF, the SMF performs S502. When there is the subscription information of the terminal apparatus in the SMF, the SMF may not perform S502.

S503. The SMF sends a session establishment response to the AMF

Correspondingly, the AMF receives the session establishment response sent by the SMF.

The SMF may accept or reject the session establishment request. When the SMF rejects the session establishment request, the session establishment response sent by the SMF to the AMF carries a cause value. For example, if the terminal apparatus requests to establish a PDU session of a network slice 1, but the SMF determines that there is no network slice 1 on a network side, the SMF includes, in the session establishment response, a cause value indicating that there is no network slice 1, and feeds back the session establishment response to the AMF.

(Optional) S504. Perform a PDU session authentication/authorization process.

In some PDU session establishment processes, to ensure security of an established PDU session, the PDU session authentication/authorization process may be performed.

For the specific PDU session authentication/authorization process, refer to the conventional technology. Details are not described herein.

(Optional) S505. The SMF performs a PCF selection process.

In some cases, the SMF needs to perform PCF selection. For example, when a dynamic policy and charging control (Policy and Charging Control, PCC) rule is deployed, the SMF may perform PCF selection.

Optionally, the SMF selects a PCF by querying the NRF.

S506. The PCF sends RAT preference parameter information to the SMF.

Correspondingly, the SMF receives the RAT preference parameter information sent by the PCF.

Optionally, the RAT preference parameter information is used to indicate a target radio access technology used to transmit data of a target application. Alternatively, the RAT preference parameter information may be used to indicate a target radio access technology that is preferentially used to transmit data of a target application.

A radio access technology in this embodiment of this application includes an NR technology, an E-UTRA technology, an E-UTRA-NR dual connectivity technology, a UTRA technology, a GERAN technology, and a CDMA2000-1XRTT technology. Certainly, another radio access technology may further be included. This is not limited in this embodiment of this application.

For example, an access network apparatus is a base station. Generally, base stations using different radio access technologies have different features, such as different coverage features and transmission features. Using the NR technology and the E-UTRA technology as an example, coverage of a base station using the E-UTRA technology (which is referred to as an E-UTRA base station for short below) is wider than coverage of a base station using the NR technology (which is referred to as an NR base station for short below), and a data transmission rate of the NR base station is greater than that of the E-UTRA base station.

In addition, as described above, different apps usually have different data transmission requirements.

Therefore, in this embodiment of this application, it is considered that data of the different apps is split to different access network devices, and the RAT preference parameter information is used to indicate radio access technologies used to transmit the data of the different applications. For example, the RAT preference parameter information may indicate that the NR technology is used to transmit data of an instant messaging app. Alternatively, the RAT preference parameter information is used to indicate different radio access technologies that are preferentially used to transmit the data of the different applications. For example, the RAT preference parameter information may indicate that the NR technology or the E-UTRA technology may be used to transmit data of an instant messaging app. In addition, when the terminal apparatus is simultaneously connected to both the NR base station and the E-UTRA base station, the NR base station is preferentially used to transmit the data of the instant messaging app.

Optionally, the SMF may request a policy rule from the PCF, and the PCF sends the RAT preference parameter information to the SMF. Alternatively, the PCF actively sends the RAT preference parameter information to the SMF.

Optionally, the PCF sends the RAT preference parameter information to the SMF in two specific manners:

Manner 1: A new PCC rule may be defined, and the PCF sends the new PCC rule to the SMF, where the new PCC rule includes the RAT preference parameter information. Table 1 describes a PCC rule that is used as an example. RAT Preference is the RAT preference parameter information.

**Table 1**

| Information name | Description | Category | PCF permitted to modify for a dynamic PCC rule in the SMF |
|---|---|---|---|
| Rule identifier | Uniquely identifies the PCC rule, within a PDU Session. It is used between PCF and SMF for referencing PCC rules. | Mandatory | No |
| Service data flow detection | This part defines the method for detecting packets belonging to a service data flow. | | |
| Precedence | Determines the order, in which the service data flow templates are applied at service data flow detection, enforcement and charging. (NOTE 1). | Conditional (NOTE 2) | Yes |
| Service data flow template | For IP PDU traffic: Either a list of service data flow filters or an application identifier that references the corresponding application detection filter for the detection of the service data flow. For Ethernet PDU traffic: Combination of traffic patterns of the Ethernet PDU traffic. It is defined in 3GPP TS 23.501 [2], clause 5.7.6.3 | Mandatory (NOTE 3) | Conditional (NOTE 4) |
| Mute for notification | Defines whether application's start or stop notification is to be muted. | Conditional (NOTE 5) | No |
| Policy control | This part defines how to apply policy control for the service data flow. | | |
| Gate status | The gate status indicates whether the service data flow, detected by the service data flow template, may pass (Gate is open) or shall be discarded (Gate is closed). | | Yes |
| **RAT Preference** | **Indicates which RAT the service data flow detected by the service data flow template prefers to access.** | **Optional** | **Yes** |
| QoS Notification Control (QNC) | Indicates whether notifications are requested from 3GPP RAN when the GFBR can no longer (or again) be fulfilled for a QoS Flow during the lifetime of the QoS Flow. | Conditional (NOTE 15) | Yes |

Table 1 lists entries included in the PCC rule, where the PCC rule includes, for example, the RAT preference parameter information (RAT Preference) and a QoS notification control policy (QoS Notification Control).

Manner 2: The PCF sends QoS parameter information to the SMF, where the QoS parameter information includes the RAT preference parameter information. Table 2 describes QoS parameter information that is used as an example. Parts in bold are the RAT preference parameter information.

**Table 2**

| 5QI Value | Resource Type | Default Priority Level | Packet Delay Budget | Packet Error Rate | DefaultMax imum Data Burst Volume (NOTE 2) | Default Averaging Window | **RAT Preference** | Example Services |
|---|---|---|---|---|---|---|---|---|
| 10 | Delay Critical GBR | 11 | 5 ms | 10-5 | 160 B | TBD | **NR** | Remote control (see TS 22.261 [2]) |
| 11 NOTE 4 | | 12 | 10 ms NOTE 5 | 10-5 | 320 B | TBD | **E-Utran** | Intelligent transport systems |
| 12 | | 13 | 20 ms | 10-5 | 640 B | TBD | ... | |
| 16 NOTE 4 | | 18 | 10 ms | 10-4 | 255 B | TBD | ... | Discrete Automation |
| 17 NOTE 4 | | 19 | 10 ms | 10-4 | 1358 B NOTE 3 | TBD | ... | Discrete Automation |
| 1 | GBRNOT E1 | 20 | 100 ms | 10-2 | N/A | TBD | ... | Conversational Voice |
| 2 | | 40 | 150 ms | 10-3 | N/A | TBD | ... | Conversational Video (Live Streaming) |
| 3 | | 30 | 50 ms | 10-3 | N/A | TBD | ... | Real Time Gaming, V2X messages Electricity distribution - medium voltage, Process |
| | | | | | | | | automation-monitoring |
| 4 | | 50 | 300 ms | 10-6 | N/A | TBD | ... | Non-Conversational Video (Buffered Streaming) |

It should be noted that the QoS parameter information in this embodiment of this application may be the 5G quality of service identifier (Fifth-generation QoS Identifier, 5QI) shown in Table 2. The 5QI is a scalar, and is used to obtain, through indexing, a 5G QoS feature corresponding to the 5QI. For example, when a value of the 5QI is 3, corresponding 5G QoS features include that a packet delay (Packet Delay Budget) is 50 ms, that a default priority is 30, the RAT preference parameter information, and the like.

It should be noted that the RAT preference parameter information in the PCF may be from an AF network element. Alternatively, the PCF may make a policy decision based on some information reported by the SMF. The policy decision includes determining the radio access technology RAT preference parameter information. For detailed descriptions of obtaining, by the PCF, the RAT preference parameter information based on the information reported by the SMF, refer to content in S509.

S507. The SMF performs QoS flow binding based on the RAT preference parameter information.

In this embodiment of this application, the QoS flow binding means that the SMF associates the PCC rule with a QoS flow based on the RAT preference parameter information, so that the data of the different applications is associated with different QoS flows, and is transmitted by using the different QoS flows. For a specific procedure for associating the PCC rule with the QoS flow, refer to the conventional technology. Details are not described herein.

(Optional) S508. The SMF performs a UPF selection process.

In a possible implementation, the SMF determines, by querying the NRF, an UPF that interacts with the SMF.

(Optional) S509. The SMF sends session related information to the PCF.

Correspondingly, the PCF receives the session related information sent by the SMF.

The session related information includes but is not limited to an internet protocol (Internet Protocol, IP) address or prefix of the terminal apparatus and information reported based on a trigger.

Optionally, the PCF may set the trigger (trigger) for the SMF. The trigger is used to indicate a trigger condition for the SMF to report information. The trigger may be specifically a policy control request trigger (Policy Control Request Trigger). Alternatively, the PCF may subscribe to an event notification from the SMF (namely, a subscribe/notify service). In this embodiment of this application, the trigger condition may be that a new radio access technology is detected. The SMF detects a radio access technology supported by an access network apparatus managed by the SMF. After the new radio access technology is detected, the trigger condition indicated by the trigger is satisfied, and the SMF sends, to the PCF, information about the radio access technology supported by the access network apparatus managed by the SMF. For example, the SMF manages an access network apparatus that uses a radio access technology 1 and an access network apparatus that uses a radio access technology 2. During PDU session establishment, if the SMF detects an access network apparatus that uses a new radio access technology, the trigger condition of the trigger is satisfied, and the SMF sends information about the new radio access technology to the PCF, or the SMF may report, to the PCF, whether a dual connectivity technology is supported. The dual connectivity means that a terminal is simultaneously served by two or more base stations. Correspondingly, after receiving the information about the new radio access technology, the PCF may make the policy decision based on the information about the new radio access technology. The policy decision includes determining the radio access technology RAT preference parameter information. For example, after receiving the information about the new radio access technology, the PCF may make a new PCC rule based on the information about the new radio access technology. The PCC rule includes new RAT preference parameter information. The RAT preference parameter information indicates that the new radio access technology may be used to transmit data of an application, to split data of different applications to access network apparatuses that use different radio access technologies. For another example, the PCF receives information, sent by the SMF, about whether dual connectivity is supported, and makes a new PCC rule based on the information about whether dual connectivity is supported. When determining that dual connectivity is not supported, the PCF may not deliver the RAT preference parameter information to the SMF, to reduce signaling overheads.

Alternatively, after receiving the information about the new radio access technology, the PCF determines new QoS parameter information based on the information about the radio access technology. The QoS parameter information includes new RAT preference parameter information. For another example, the PCF receives the information, sent by the SMF, about whether dual connectivity is supported, and determines new QoS parameter information based on the information about whether dual connectivity is supported.

(Optional) S510. The SMF sends tunnel information to the UPF.

Correspondingly, the UPF receives the tunnel information sent by the SMF.

The tunnel information is used to indicate an access network apparatus associated with the UPF network element. Subsequently, when receiving downlink data sent by a DN network element, the UPF network element sends, based on the tunnel information, the downlink data to the access network apparatus associated with the UPF network element.

S511. The SMF sends the RAT preference parameter information to the access network apparatus.

Correspondingly, the access network apparatus receives the RAT preference parameter information sent by the SMF.

Optionally, the SMF sends an N2 message to the access network apparatus. The N2 message includes a quality of service profile (QoS Profile), and the QoS Profile includes the RAT preference parameter information. The N2 message is used to indicate the access network apparatus to transmit the data based on the RAT preference parameter information. In a possible implementation, the SMF sends the N2 message to the AMF, and then the AMF sends the N2 message to the access network apparatus.

S512. The SMF sends the RAT preference parameter information to the terminal apparatus.

Correspondingly, the terminal apparatus receives the RAT preference parameter information sent by the SMF.

Optionally, the SMF sends an N1 message to the terminal apparatus. The N1 message includes a quality of service rule (QoS Rule), and the QoS Rule includes the RAT preference parameter information. The N1 message is used to indicate the terminal apparatus to transmit data based on the RAT preference parameter information. In a possible implementation, the SMF sends the N1 message to the AMF, and then the AMF sends the N1 message to the terminal apparatus.

(Optional) S513. The SMF sends the RAT preference parameter information to the UPF network element.

Correspondingly, the UPF receives the RAT preference parameter information sent by the SMF.

The RAT preference parameter information is used to indicate a radio access technology used to transmit the data.

Optionally, the SMF does not send the RAT preference parameter information to the UPF. In this case, after receiving the downlink data sent by the DN network element, the UPF sends, based on the foregoing tunnel information, the downlink data to the access network apparatus associated with the UPF.

Optionally, the SMF sends the RAT preference parameter information to the UPF. In this case, the UPF may determine, based on the tunnel information and the RAT preference parameter information, an access network apparatus that interacts with the UPF. For example, referring to (b) in FIG. 4, an NR base station is a master base station, and an E-UTRA base station is a secondary base station. The UPF receives the RAT preference parameter information sent by the SMF, where the RAT preference parameter information indicates that the NR base station is used to transmit data of a WeChat (WeChat) application. Subsequently, when receiving downlink data, sent by the DN network element, of the WeChat application, the UPF sends the downlink data of the WeChat application to the NR base station associated with the data of the WeChat application.

A sequence of S511, S512, and S513 is not limited in this embodiment of this application. To be specific, the SMF may first send the RAT preference parameter information to the terminal apparatus, or may first send the RAT preference parameter information to the access network apparatus, or may first send the RAT preference parameter information to the UPF. Certainly, two or three of the steps may alternatively be simultaneously performed.

S514. The access network apparatus splits the downlink data based on the RAT preference parameter information.

That the access network apparatus splits the downlink data means that the access network apparatus transmits the downlink data of the target application based on the RAT preference parameter information and by using the target radio access technology. Specifically, the access network apparatus determines, based on the RAT preference parameter information, whether the target radio access technology is a radio access technology used by the access network apparatus. If the target radio access technology is a radio access technology used by the access network apparatus, the access network apparatus sends the downlink data to the terminal apparatus. If the target radio access technology is not a radio access technology used by the access network apparatus, the access network apparatus sends the downlink data to an access network apparatus that uses the target radio access technology, and then the access network apparatus that uses the target radio access technology sends the downlink data to the terminal apparatus. Alternatively, a master access network apparatus notifies (through the SMF) the UPF of split information, and the UPF performs data split. The split information refers to a correspondence between an application and a tunnel, and the tunnel may be a tunnel between the UPF and the access network apparatus.

In a possible implementation, when there is one data connection (that is, a user plane connection) between a core network device (for example, the UPF) and the access network apparatus, the access network apparatus splits the downlink data. When there are a plurality of data connections between a core network device and the access network apparatus, the core network device splits the downlink data. For example, in (a) and (c) in FIG. 4, the access network apparatus performs data split. In (b) and (d) in FIG. 4, the core network device performs data split.

For downlink data of an application, a radio access technology may be used to transmit the downlink data of the application. For downlink data of another application, another radio access technology may be used to transmit the downlink data of the another application. Below, for that uplink data of the target application is transmitted by using the target radio access technology, refer to the descriptions herein. Details are not described again below. For example, the NR technology may be used to transmit the data of the instant messaging application (for example, the WeChat application), to ensure a low service latency. The E-UTRA technology may be used to transmit data of a video playback application, to improve a network throughput. Certainly, the correspondence between an application and a radio access technology herein is merely an example. During actual application, corresponding radio access technologies may be flexibly set based on characteristics of different applications. This is not limited in this embodiment of this application.

Optionally, after receiving the RAT preference parameter information, the access network apparatus may accept a configuration indicated by the RAT preference parameter information, or may reject a configuration indicated by the RAT preference parameter information. That the access network apparatus accepts the configuration indicated by the RAT preference parameter information means that subsequently, the access network apparatus may transmit the data of the target application based on the RAT preference parameter information and by using the target radio access technology. That the access network apparatus rejects the RAT preference parameter information means that subsequently, the access network apparatus may not transmit the data of the target application based on the RAT preference parameter information. For example, referring to (a) in FIG. 4, the NR base station receives the RAT preference parameter information. The RAT preference parameter information indicates that the UTRA technology is used to transmit the data of the WeChat application. However, the NR base station is not connected to the UTRA base station. In this case, the NR base station may reject the RAT preference parameter information. In this way, when subsequently receiving the downlink data of the WeChat application, the NR base station may not split the downlink data based on the RAT preference parameter information.

Optionally, if the access network apparatus determines to reject the RAT preference parameter information, the access network apparatus rejects establishment of a QoS flow. For a process in which the access network apparatus rejects the establishment of the QoS flow, refer to the conventional technology. Details are not described herein.

Optionally, the access network apparatus sends a RAT feedback to the core network device, to indicate whether the access network apparatus accepts the RAT preference parameter information.

An example in which the base station accepts the RAT preference parameter information is used. With reference to (a) in FIG. 4, the NR base station is a master base station, the E-UTRA base station is a secondary base station, and there is a signaling connection between the NR base station and the core network device. In this case, the NR base station may receive signaling from the core network device. For example, the NR base station receives the N2 message sent by the SMF, where the N2 message includes the QoS profile, and the QoS profile includes the RAT preference parameter information; and determines, based on the RAT preference parameter information, that the radio access technology used to transmit the downlink data of the target application is the NR technology. Subsequently, when receiving the downlink data, sent by the UPF, of the target application, the NR base station sends the downlink data to the terminal apparatus. For another example, the NR base station receives the RAT preference parameter information sent by the SMF, and determines, based on the RAT preference parameter information, that the radio access technology used to transmit the downlink data of the target application is the E-UTRA technology. Subsequently, when the NR base station receives the downlink data, sent by the UPF, of the target application, the NR base station sends the downlink data to the E-UTRA base station, and then the E-UTRA base station sends the downlink data to the terminal apparatus.

S515. The terminal apparatus transmits the uplink data of the target application by using the target radio access technology.

For example, the terminal apparatus determines, based on the RAT preference parameter information, that the NR technology is used to transmit the data of the WeChat application. Subsequently, when sending the uplink data of the WeChat application, the terminal apparatus sends the uplink data of the WeChat application to a reachable NR base station. "Reachable" means that the terminal apparatus is connected to the NR base station and can exchange user plane data with the NR base station.

(Optional) S516. The UPF transmits the downlink data of the target application by using the target radio access technology (that is, performs data split).

That the UPF performs data split includes at least two cases:

Case 1: The UPF may perform S513. To be specific, the UPF receives the RAT preference parameter information sent by the SMF. In this case, the UPF may split the downlink data based on the RAT preference parameter information. Certainly, the UPF may not perform S513. In this case, the UPF may transmit the downlink data to the associated access network apparatus based on the tunnel information.

Referring to (b) in FIG. 4, the NR base station is the master base station, and the E-UTRA base station is the secondary base station. There is a user plane connection and a control plane connection between the NR base station and the core network device, there is a user plane connection and a control plane connection between the NR base station and the terminal apparatus, there is a user plane connection between the E-UTRA base station and the core network device, and there is a user plane connection between the E-UTRAbase station and the terminal apparatus. In this case, the core network device (for example, the UPF) usually splits the downlink data. Specifically, the UPF determines, based on the RAT preference parameter information, that the NR technology is used to transmit the data of the WeChat application. Subsequently, when receiving the downlink data, sent by the DN network element, of the WeChat application, the UPF sends the downlink data to the NR base station.

Case 2: The UPF obtains the split information from the master access network apparatus, and splits the downlink data based on the split information.

The split information refers to the correspondence between an application and a tunnel, and the tunnel may be the tunnel between the UPF and the access network apparatus.

It should be noted that a sequence of S514, S515, and S516 is also not limited in this embodiment of this application. During actual implementation, S514, S515, and S516 may be sequentially performed. Certainly, S515 may be first performed, then S514 is performed, and then S516 is performed. Alternatively, the three steps are performed in another sequence.

According to the data transmission method provided in this embodiment of this application, the session management network element receives the RAT preference parameter information sent by the policy management network element, and sends the RAT preference parameter information to the at least one of the access network apparatus, the terminal apparatus, and the user plane function network element, to indicate the radio access technology used by the access network apparatus, the terminal apparatus, and the user plane function network element to transmit the data. In this way, different radio access technologies may be used to transmit different data, to improve network resource utilization.

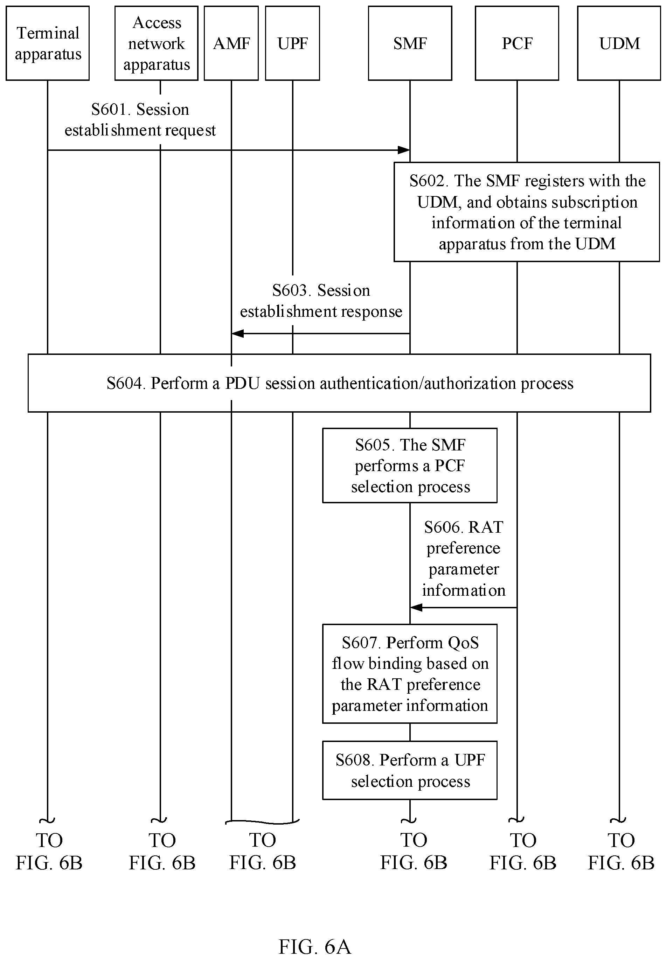

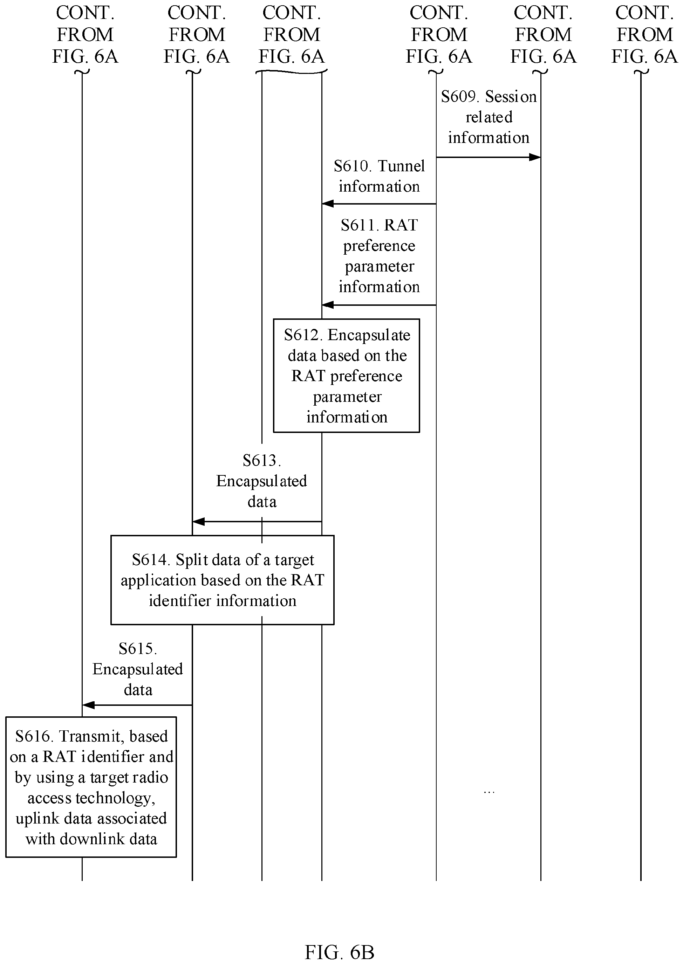

An embodiment of this application further provides a data transmission method. In the method, there are different user plane identifiers for different data, to distinguish between the different data and split the different data. Referring to FIG. 6A and FIG. 6B, the method includes the following steps.

S601. A terminal apparatus sends a session establishment request to an SMF.

Correspondingly, the SMF receives the session establishment request.

(Optional) S602. The SMF registers with a UDM, and obtains subscription information of the terminal apparatus from the UDM.

S603. The SMF sends a session establishment response to an AMF

(Optional) S604. Perform a PDU session authentication/authorization process.

(Optional) S605. The SMF performs a PCF selection process.

S606. A PCF sends RAT preference parameter information to the SMF.

Correspondingly, the SMF receives the RAT preference parameter information sent by the PCF.

S607. The SMF performs QoS flow binding based on the RAT preference parameter information.

(Optional) S608. The SMF performs a UPF selection process.

(Optional) S609. The SMF sends session related information to the PCF.

(Optional) S610. The SMF sends tunnel information to a UPF.

S601 to S610 are the same as S501 to S510. For detailed explanations, refer to S501 to S510.

S611. The SMF sends the RAT preference parameter information to the UPF.

Correspondingly, the UPF network element receives the RAT preference parameter information sent by the SMF.

For specific descriptions of the RAT preference parameter information, refer to the foregoing descriptions.

S612. The UPF network element encapsulates the data based on the RAT preference parameter information.

The encapsulated data carries RAT identifier information, and the RAT identifier information is used to indicate a target radio access technology used to transmit the data.

For example, the UPF determines, based on the RAT preference parameter information, that an NR technology is used to transmit downlink data of a WeChat application. Subsequently, when receiving the downlink data, sent by a DN network element, of the WeChat application, the UPF re-encapsulates the downlink data. For example, the UPF adds a data packet header to the original downlink data. A field of the data packet header carries the RAT identifier information, to indicate that the NR technology is used to transmit data of the WeChat application. Optionally, when a core network device is simultaneously connected to two access network apparatuses, the RAT identifier information may be 1-bit identifier information. For example, 0 identifies the NR technology, and 1 identifies an E-UTRA technology. Certainly, the RAT identifier information may alternatively be in another implementation form. This is not limited in this embodiment of this application.

S613. The UPF network element sends the encapsulated data to an access network apparatus.

Correspondingly, the access network apparatus receives the encapsulated data sent by the UPF.

The encapsulated data is used to indicate the access network apparatus to transmit the data based on RAT identifier information. For example, that the RAT identifier information is 0 indicates that the NR technology is used to transmit data of a target application, and that the RAT identifier information is 1 indicates that the E-UTRA technology is used to transmit the data of the target application.

S614. The access network apparatus splits the data of the target application based on the RAT identifier information.

For a specific explanation of splitting the data by the access network apparatus, refer to the embodiment corresponding to FIG. 5A and FIG. 5B. A difference from the embodiment in FIG. 5A and FIG. 5B lies in: In the embodiment in FIG. 5A and FIG. 5B, splitting means that the access network apparatus splits the data based on the RAT preference parameter information; splitting herein means that the access network apparatus splits the data based on the RAT identifier information.

S615. The access network apparatus sends downlink data of the target application to the terminal apparatus.

Correspondingly, the terminal apparatus receives the downlink data, sent by the access network apparatus, of the target application.

The downlink data carries the RAT identifier information.

S616. The terminal apparatus transmits, based on the RAT identifier information and by using the target radio access technology, uplink data associated with the downlink data.

The uplink data associated with the downlink data may be uplink data that has a same application as the downlink data. For example, for the downlink data of the WeChat application, uplink data associated with the downlink data is uplink data of the WeChat application.

For example, when the terminal apparatus receives downlink data of an application, and RAT identifier information included in the downlink data is 0, it indicates that the NR technology is used to transmit the downlink data. Subsequently, the terminal apparatus may transmit uplink data of the same application by using the NR technology. In this way, similar transmission effects can be achieved for the uplink data and the downlink data of the same application.

Specifically, after receiving a downlink data packet, the terminal apparatus obtains, by performing reflective inversion on a filter (filter) of the downlink data packet, an uplink data packet associated with the downlink data. For specific descriptions of performing reflective inversion on the filter, refer to the conventional technology. Details are not described herein.

According to the data transmission method provided in this embodiment of this application, the UPF re-encapsulates the data. The encapsulated data includes the RAT identifier information, and the RAT identifier information is used as a user plane marker of the data, to distinguish between different data. Specifically, the RAT identifier information is used to distinguish between radio access technologies associated with data of different applications, in other words, radio technologies used to transmit the data of the applications. Subsequently, in uplink and downlink data transmission processes, both the terminal apparatus and the access network apparatus may split the data based on the RAT identifier information included in the data, to improve network resource utilization.

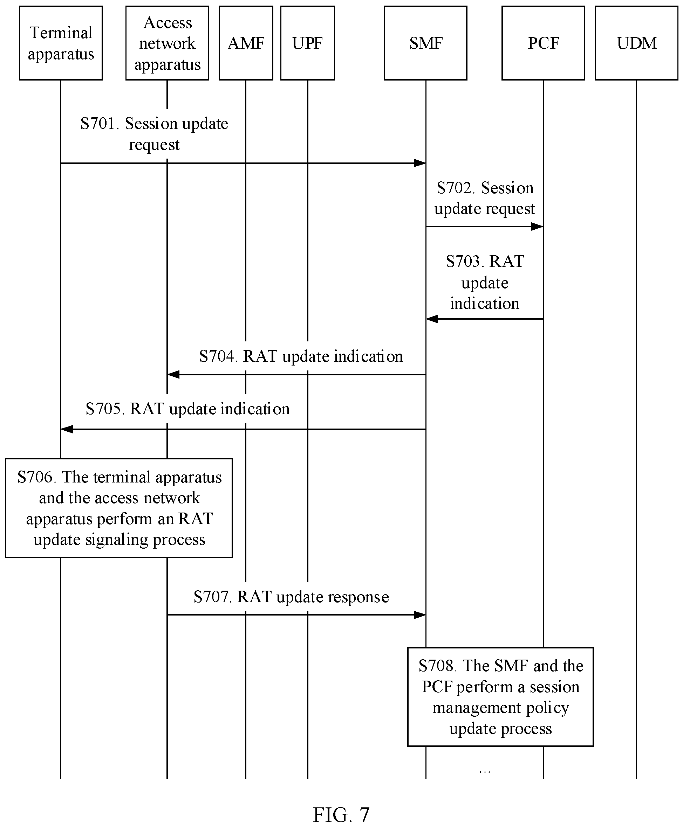

An embodiment of this application further provides a data transmission method. The method is applied to a PDU session update process. Referring to FIG. 7, the method includes the following steps.

S701. A terminal apparatus sends a session update request to an SMF.

Correspondingly, the SMF receives the session update request.

In a possible implementation, the terminal apparatus sends the session update request to the SMF through an AMF. Specifically, the terminal apparatus sends the session update request to the AMF, and the AMF sends the session update request to the SMF.

S702. The SMF sends the session update request to a PCF.

Correspondingly, the PCF receives the session update request sent by the SMF.

S703. The PCF sends an RAT update indication to the SMF.

Correspondingly, the SMF receives the RAT update indication sent by the PCF.

The RAT update indication is used to indicate to update RAT preference parameter information, and the RAT update indication includes updated RAT preference parameter information.

S704. The SMF sends the RAT update indication to an access network apparatus.

Correspondingly, the access network apparatus receives the RAT update indication sent by the SMF.

Optionally, S704 may be specifically implemented as follows: The SMF sends an N2 message to the access network apparatus. If the SMF determines to delete a guaranteed bit rate (Guaranteed Bit Rate, GBR) QoS flow, optionally, the N2 message includes a PDU session identifier (Identification, ID) and a quality of service flow identifier (QoS Flow Identifier, QFI).

When the SMF determines to modify a QoS flow, the N2 message includes a QoS file (QoS Profile). The QoS profile includes the updated RAT preference parameter information. Optionally, the N2 message further includes a PDU session ID and a QFI.

S705. The SMF sends the RAT update indication to the terminal apparatus.

Correspondingly, the terminal apparatus receives the RAT update indication sent by the SMF.

Optionally, S705 may be specifically implemented as follows: The SMF sends an N1 message to the terminal apparatus. If the SMF determines to delete the GBR QoS flow, optionally, the N1 message includes the PDU session ID, a QoS rule that needs to be deleted, and a corresponding QoS rule operation (that is, deletion). When the SMF determines to modify the QoS flow, optionally, the N1 message includes the PDU session ID, a QoS rule that needs to be modified, and a corresponding QoS rule operation (that is, modification). The QoS rule includes the updated RAT preference parameter information.

S706. The terminal apparatus and the access network apparatus perform an RAT update signaling process.

The RAT update signaling process is used to update resource configuration between the access network apparatus and the terminal apparatus.

For example, the terminal apparatus and the access network apparatus perform radio resource control (Radio Resource Control, RRC) connection reconfiguration, to modify the resource configuration.

S707. The access network apparatus sends an RAT update response to the SMF.

Correspondingly, the SMF receives the RAT update response sent by the access network apparatus.

The RAT update response includes RAT preference parameter information that can be accepted by the access network apparatus. For example, if the RAT update indication includes five pieces of RAT preference parameter information when the PCF delivers the RAT update indication, and the access network apparatus may accept three pieces of the RAT preference parameter information, the RAT update response includes the three pieces of RAT preference parameter information that can be supported.

S708. The SMF and the PCF perform a session management policy update process.

In a possible implementation, the SMF sends, to the PCF, the RAT preference parameter information that can be supported by the access network apparatus, and the PCF makes a policy decision based on the received information.

According to the data transmission method provided in this embodiment of this application, the RAT preference parameter information can be updated. Subsequently, both the terminal apparatus and the access network apparatus may split uplink data and downlink data based on the updated RAT preference parameter information.

It should be noted that the messages in the embodiments of this application are merely example messages. During actual implementation, one message may be used to include the foregoing plurality of messages, or content included in one message above may be divided into a plurality of messages for transmission. This is not limited in the embodiments of this application.

It can be understood that, to implement the foregoing functions, the network elements in the embodiments of this application each include a corresponding hardware structure and/or software module for executing each function. With reference to units and algorithm steps in the examples described in the embodiments disclosed in this application, the embodiments of this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the technical solutions of the embodiments of this application.

In the embodiments of this application, division of the network element into functional units may be performed based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that the division into units in the embodiments of this application is an example, and is merely division into logical functions. There may be another division manner during actual implementation.

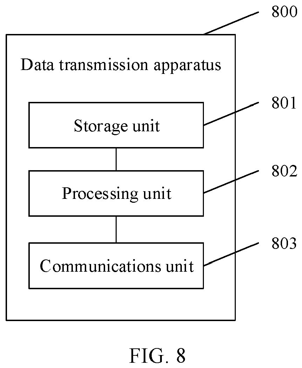

FIG. 8 is a schematic block diagram of a data transmission apparatus according to an embodiment of this application. The data transmission apparatus may be the foregoing terminal apparatus, access network apparatus, user plane function network element, session management network element, or policy management network element. The data transmission apparatus 800 may exist in a form of software, or may be a chip that can be used in a device. The data transmission apparatus 800 includes a processing unit 802 and a communications unit 803.

Optionally, the data transmission apparatus 800 may further include a storage unit 801. The storage unit 801 is configured to store program code and data of the data transmission apparatus 800. The data may include but is not limited to original data, intermediate data, or the like.

If the data transmission apparatus 800 is the terminal apparatus, the processing unit 802 may be configured to support the terminal apparatus in encapsulating uplink data associated with downlink data, performing S706 in FIG. 7, and the like, and/or another process used for the solutions described in this specification. The communications unit 803 is configured to support communication between the terminal apparatus and another network element (for example, the access network apparatus). For example, the communications unit 803 supports the terminal in performing S501, S512, and S515 in FIG. 5A and FIG. 5B, S601, S615, and S616 in FIG. 6A and FIG. 6B, S701 and S705 in FIG. 7, and the like.

If the data transmission apparatus 800 is the access network apparatus, the processing unit 802 may be configured to support the access network apparatus in performing S706 in FIG. 7, and/or another process used for the solutions described in this specification. The communications unit 803 is configured to support communication between the access network apparatus and another network element (for example, the terminal apparatus). For example, the communications unit 803 supports the access network apparatus in performing S511 and S514 in FIG. 5B, S613, S614, and S615 in FIG. 6B, S704 and S707 in FIG. 7, and the like.

If the data transmission apparatus 800 is the user plane function network element, the processing unit 802 may be configured to support the user plane function network element in performing S612 in 6, and/or another process used for the solutions described in this specification. The communications unit 803 is configured to support communication between the user plane function network element and another network element (for example, the access network apparatus). For example, the communications unit 803 supports the user plane function network element in performing S510, S513, and S516 in FIG. 5B, S610, S611, S612, and S613 in FIG. 6B, and the like.

If the data transmission apparatus 800 is the session management network element, the processing unit 802 may be configured to support the session management network element in performing S505, S507, and S508 in 5, S605, S607, and S608 in FIG. 6A, and/or another process used for the solutions described in this specification. The communications unit 803 is configured to support communication between the session management network element and another network element (for example, the access network apparatus). For example, the communications unit 803 supports the session management network element in performing S501, S503, S506, S509, S510, S511, S512 and S513 in FIG. 5A and FIG. 5B, S601, S603, S606, S609, S610 and S611 in FIG. 6A and FIG. 6B, S701, S702, S703, S704, S705 and S707 in FIG. 7, and the like.

If the data transmission apparatus 800 is the policy management network element, the processing unit 802 may be configured to support the policy management network element in, for example, making a policy decision, and/or performing another process used for the solutions described in this specification. The communications unit 803 is configured to support communication between the policy management network element and another network element (for example, the session management network element). For example, the communications unit 803 supports the policy management network element in performing S506 and S509 in FIG. 5A and FIG. 5B, S606 and S609 in FIG. 6A and FIG. 6B, S702 and S703 in FIG. 7, and the like.

In a possible manner, the processing unit 802 may be a controller or the processor 301 or the processor 305 in FIG. 3. For example, the processing unit 802 may be a central processing unit (Central Processing Unit, CPU), a general-purpose processor, a digital signal processing (Digital Signal Processing, DSP), an application-specific integrated circuit (Application Specific Integrated Circuit, ASIC), a field programmable gate array (Field-Programmable Gate Array, FPGA) or another programmable logic device, a transistor logic device, a hardware component, or any combination thereof. The processor 802 may implement or execute various example logical blocks, modules, and circuits described with reference to content disclosed in this application. The processor may alternatively be a combination for implementing a computing function, for example, a combination of one or more microprocessors or a combination of a DSP and a microprocessor. The communications unit 803 may be a transceiver, a transceiver circuit, the communications interface 304 in FIG. 3, or the like. The storage unit 801 may be the memory 303 in FIG. 3.

A person of ordinary skill in the art may understand that all or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state drive (Solid State Disk, SSD)), or the like.

In the several embodiments provided in this application, it should be understood that the disclosed system, apparatus, and method may be implemented in other manners. For example, the described apparatus embodiments are merely examples. For example, division into units is merely division into logical functions and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or another form.

The units described as separate parts may or may not be physically separate, and parts displayed as units may or may not be physical units, that is, may be located in one position, or may be distributed on a plurality of network units (for example, terminal devices). Some or all of the units may be selected based on an actual requirement to achieve the objectives of the solutions of the embodiments.

In addition, functional units in the embodiments of this application may be integrated into one processing unit, or each of the functional units may exist alone, or two or more units may be integrated into one unit. The integrated unit may be implemented in a form of hardware, or may be implemented in a form of hardware in addition to a software functional unit.

Based on the foregoing descriptions of the implementations, a person skilled in the art may clearly understand that this application may be implemented by software in addition to necessary universal hardware or by hardware only. In most cases, the former is a preferred implementation. Based on such an understanding, the technical solutions of this application essentially or the part contributing to the conventional technology may be implemented in a form of a software product. The software product is stored in a readable storage medium, such as a floppy disk, a hard disk or an optical disc of a computer, and includes several instructions for instructing a computer device (which may be a personal computer, a server, a network device, or the like) to perform the methods described in the embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, comprising:
receiving, by a session management network element, radio access technology RAT preference parameter information sent by a policy management network element, wherein the RAT preference parameter information is used to indicate a target radio access technology used to transmit data of a target application; and
sending, by the session management network element, the RAT preference parameter information to at least one of an access network apparatus, a terminal apparatus, and a user plane function UPF network element.

2. The data transmission method according to claim 1, wherein the method further comprises:
performing, by the session management network element, quality of service flow QoS flow binding based on the RAT preference parameter information.

3. The data transmission method according to claim 1 or 2, wherein the receiving, by a session management network element, RAT preference parameter information sent by a policy management network element comprises:
receiving, by the session management network element, policy and charging control PCC rule information sent by the policy management network element, wherein the PCC rule information comprises the RAT preference parameter information; or receiving, by the session management network element, quality of service QoS parameter information sent by the policy management network element, wherein the QoS parameter information comprises the RAT preference parameter information.

4. The data transmission method according to claim 1 or 2, wherein the sending, by the session management network element, the RAT preference parameter information to an access network apparatus comprises:
sending, by the session management network element, an N2 message to the access network apparatus, wherein the N2 message comprises the RAT preference parameter information, and the N2 message is used to indicate the access network apparatus to transmit the data based on the RAT preference parameter information.

5. The data transmission method according to claim 1 or 2, wherein the sending, by the session management network element, the RAT preference parameter information to a terminal apparatus comprises:
sending, by the session management network element, an N1 message to the terminal apparatus, wherein the N1 message comprises the RAT preference parameter information, and the N1 message is used to indicate the terminal apparatus to transmit data based on the RAT preference parameter information.

6. The data transmission method according to any one of claims 1 to 5, wherein the method further comprises:
sending, by the session management network element to the policy management network element based on a trigger condition, information about a radio access technology supported by the access network apparatus managed by the session management network element, wherein the information about the radio access technology is used by the policy management network element to make a policy decision, and the policy decision comprises determining the RAT preference parameter information.

7. A data transmission method, comprising:
receiving, by a terminal apparatus, radio access technology RAT preference parameter information sent by a session management network element, wherein the RAT preference parameter information is used to indicate a target radio access technology used to transmit data of a target application; and
transmitting, by the terminal apparatus, uplink data of the target application by using the target radio access technology.

8. The data transmission method according to claim 7, wherein the receiving, by a terminal apparatus, RAT preference parameter information sent by a session management network element comprises:
receiving, by the terminal apparatus, an N1 message sent by the session management network element, wherein the N1 message comprises the RAT preference parameter information.

9. A data transmission method, comprising:
receiving, by a terminal apparatus, downlink data, sent by an access network apparatus, of a target application, wherein the downlink data carries radio access technology RAT identifier information, and the RAT identifier information is used to indicate a target radio access technology used to transmit the downlink data; and
transmitting, by the terminal apparatus based on the RAT identifier information and by using the target radio access technology, uplink data associated with the downlink data.

10. A data transmission method, comprising:
receiving, by an access network apparatus, radio access technology RAT preference parameter information sent by a session management network element, wherein the RAT preference parameter information is used to indicate a target radio access technology used to transmit data of a target application; and
transmitting, by the access network apparatus, the data of the target application based on the RAT preference parameter information and by using the target radio access technology.

11. The data transmission method according to claim 10, wherein the method further comprises:
receiving, by the access network apparatus, an RAT update indication sent by the session management network element, wherein the RAT update indication is used to indicate to update the RAT preference parameter information; and
sending, by the access network apparatus, RAT preference parameter information supported by the access network apparatus to the session management network element.

12. The data transmission method according to claim 10 or 11, wherein the receiving, by an access network apparatus, RAT preference parameter information sent by a session management network element comprises:
receiving, by the access network apparatus, an N2 message sent by the session management network element, wherein the N2 message comprises the RAT preference parameter information.

13. A data transmission method, comprising:
receiving, by an access network apparatus, data, sent by a user plane function UPF network element, of a target application, wherein the data of the target application carries radio access technology RAT identifier information, and the RAT identifier information is used to indicate a target radio access technology used to transmit the data of the target application; and
transmitting, by the access network apparatus, the data of the target application based on the RAT identifier information and by using the target radio access technology.

14. A data transmission method, comprising:
receiving, by a user plane function UPF network element, radio access technology RAT preference parameter information sent by a session management network element, wherein the RAT preference parameter information is used to indicate a target radio access technology used to transmit data;
encapsulating, by the UPF network element, the data based on the RAT preference parameter information, wherein the encapsulated data carries RAT identifier information, and the RAT identifier information is used to indicate the target radio access technology used to transmit the data; and
sending, by the UPF network element, the encapsulated data to an access network apparatus, wherein the encapsulated data is used to indicate the access network apparatus to transmit the data based on the RAT identifier information.

15. A data transmission method, comprising:
receiving, by a policy management network element, information, sent by a session management network element, about a radio access technology supported by an access network apparatus managed by the session management network element, wherein the information about the radio access technology is used by the policy management network element to make a policy decision, and the policy decision comprises determining radio access technology RAT preference parameter information; or receiving, by a policy management network element, RAT preference parameter information sent by an application function AF network element, wherein the RAT preference parameter information is used to indicate a radio access technology used to transmit data of a target application; and
sending, by the policy management network element, the RAT preference parameter information to the session management network element.

16. The data transmission method according to claim 15, wherein the sending, by the policy management network element, the RAT preference parameter information to the session management network element comprises:
sending, by the policy management network element, a policy and charging control PCC rule to the session management network element, wherein the PCC rule comprises the RAT preference parameter information; or
sending, by the policy management network element, quality of service QoS parameter information to the session management network element, wherein the QoS parameter information comprises the RAT preference parameter information.

17. A data transmission apparatus, comprising:
a transceiver, configured to receive radio access technology RAT preference parameter information sent by a policy management network element, wherein the RAT preference parameter information is used to indicate a target radio access technology used to transmit data of a target application; and send the RAT preference parameter information to at least one of an access network apparatus, a terminal apparatus, and a user plane function UPF network element.

18. The data transmission apparatus according to claim 17, wherein the apparatus further comprises:
a processor, configured to perform quality of service flow QoS flow binding based on the RAT preference parameter information.

19. The data transmission apparatus according to claim 17 or 18, wherein that the transceiver is configured to receive RAT preference parameter information sent by a policy management network element comprises: the transceiver is configured to receive policy and charging control PCC rule information sent by the policy management network element, wherein the PCC rule information comprises the RAT preference parameter information; or the transceiver is configured to receive quality of service QoS parameter information sent by the policy management network element, wherein the QoS parameter information comprises the RAT preference parameter information.

20. The data transmission apparatus according to claim 17 or 18, wherein that the transceiver is configured to send the RAT preference parameter information to an access network apparatus comprises: the transceiver is configured to send an N2 message to the access network apparatus, wherein the N2 message comprises the RAT preference parameter information, and the N2 message is used to indicate the access network apparatus to transmit the data based on the RAT preference parameter information.

21. The data transmission apparatus according to claim 17 or 18, wherein that the transceiver is configured to send the RAT preference parameter information to a terminal apparatus comprises: the transceiver is configured to send an N1 message to the terminal apparatus, wherein the N1 message comprises the RAT preference parameter information, and the N1 message is used to indicate the terminal apparatus to transmit data based on the RAT preference parameter information.

22. The data transmission apparatus according to any one of claims 17 to 21, wherein
the transceiver is further configured to send, to the policy management network element based on a trigger condition, information about a radio access technology supported by the access network apparatus managed by the data transmission apparatus, wherein the information about the radio access technology is used by the policy management network element to make a policy decision, and the policy decision comprises determining the RAT preference parameter information.

23. A data transmission apparatus, comprising:
a transceiver, configured to receive radio access technology RAT preference parameter information sent by a session management network element, wherein the RAT preference parameter information is used to indicate a target radio access technology used to transmit data of a target application; and transmit uplink data of the target application by using the target radio access technology.

24. The data transmission apparatus according to claim 23, wherein that a transceiver is configured to receive RAT preference parameter information sent by a session management network element comprises: the transceiver is configured to receive an N1 message sent by the session management network element, wherein the N1 message comprises the RAT preference parameter information.

25. A data transmission apparatus, comprising:
a transceiver, configured to receive downlink data, sent by an access network apparatus, of a target application, wherein the downlink data carries radio access technology RAT identifier information, and the RAT identifier information is used to indicate a target radio access technology used to transmit the downlink data; and transmit, based on the RAT identifier information and by using the target radio access technology, uplink data associated with the downlink data.

26. A data transmission apparatus, comprising:
a transceiver, configured to receive radio access technology RAT preference parameter information sent by a session management network element, wherein the RAT preference parameter information is used to indicate a target radio access technology used to transmit data of a target application; and transmit the data of the target application based on the RAT preference parameter information and by using the target radio access technology.

27. The data transmission apparatus according to claim 26, wherein
the transceiver is further configured to receive an RAT update indication sent by the session management network element, wherein the RAT update indication is used to indicate to update the RAT preference parameter information; and send RAT preference parameter information supported by the data transmission apparatus to the session management network element.

28. The data transmission apparatus according to claim 26 or 27, wherein that a transceiver is configured to receive RAT preference parameter information sent by a session management network element comprises: the transceiver is configured to receive an N2 message sent by the session management network element, wherein the N2 message comprises the RAT preference parameter information.

29. A data transmission apparatus, comprising:
a transceiver, configured to receive data, sent by a user plane function UPF network element, of a target application, wherein the data of the target application carries radio access technology RAT identifier information, and the RAT identifier information is used to indicate a target radio access technology used to transmit the data of the target application; and transmit the data of the target application based on the RAT identifier information and by using the target radio access technology.

30. A data transmission apparatus, comprising:
a transceiver, configured to receive radio access technology RAT preference parameter information sent by a session management network element, wherein the RAT preference parameter information is used to indicate a target radio access technology used to transmit data; and
a processor, configured to encapsulate the data based on the RAT preference parameter information, wherein the encapsulated data carries RAT identifier information, and the RAT identifier information is used to indicate the target radio access technology used to transmit the data, wherein
the transceiver is further configured to send the encapsulated data to an access network apparatus, wherein the encapsulated data is used to indicate the access network apparatus to transmit the data based on the RAT identifier information.

31. A data transmission apparatus, comprising:
a transceiver, configured to receive information, sent by a session management network element, about a radio access technology supported by an access network apparatus managed by the session management network element, wherein the information about the radio access technology is used by the policy management network element to make a policy decision, and the policy decision comprises determining radio access technology RAT preference parameter information; or receive RAT preference parameter information sent by an application function AF network element, wherein the RAT preference parameter information is used to indicate a radio access technology used to transmit data of a target application; and send the RAT preference parameter information to the session management network element.

32. The data transmission apparatus according to claim 31, wherein that the transceiver is configured to send the RAT preference parameter information to the session management network element comprises: the transceiver is configured to send a policy and charging control PCC rule to the session management network element, wherein the PCC rule comprises the RAT preference parameter information; or the transceiver is configured to send quality of service QoS parameter information to the session management network element, wherein the QoS parameter information comprises the RAT preference parameter information.

33. A data transmission apparatus, wherein the apparatus is configured to perform the data transmission method according to any one of claims 1 to 6, or configured to perform the data transmission method according to claim 7 or 8, or configured to perform the data transmission method according to claim 9, or configured to perform the data transmission method according to any one of claims 10 to 12, or configured to perform the data transmission method according to claim 13, or configured to perform the data transmission method according to claim 14, or configured to perform the data transmission method according to claim 15 or 16.
